# EUROPEAN PATENT SPECIFICATION

(11) **EP 3 150 327 B1**
(45) Date of publication and mention of the grant of the patent: **25.07.2018**
(21) Application number: 15800648.6
(22) Date of filing: 27.04.2015
(51) Int. Cl.: B23K 35/363, B23K 1/00, B23K 1/19, B23K 3/06, B23K 35/28, C22C 21/00, F28D 1/053, F28F 19/06, F28F 21/08, B23K 101/14, B23K 103/10

(54) **COATED HEAT-EXCHANGER TUBE, METHOD FOR MANUFACTURING A HEAT-EXCHANGER, AND SOLDER PASTE USED FOR COATING ON THE HEAT-EXCHANGER TUBE**
BESCHICHTETES WÄRMETAUSCHERROHR, HERSTELLUNGSVERFAHREN EINES WÄRMETAUSCHERS, UND LÖTPASTE ZUR BESCHICHTUNG DES WÄRMETAUSCHERROHRES
TUBE D'ÉCHANGEUR DE CHALEUR REVÊTU, PROCÉDÉ DE FABRICATION D'UN ÉCHANGEUR DE CHALEUR, ET PÂTE DE BRASURE UTILISÉE POUR LE REVÊTEMENT SUR LE TUBE D'ÉCHANGEUR DE CHALEUR

(30) Priority: 26.05.2014 JP 2014108119
(43) Date of publication of application: 05.04.2017
(73) Proprietor: UACJ Corporation, Tokyo 100-0004 (JP); Harima Chemicals, Inc., Kakogawa-shi, Hyogo 675-0019 (JP)
(72) Inventor: YAMASHITA, Naoki, Tokyo 100-0004 (JP); KUMAGAI, Hidetoshi, Tokyo 100-0004 (JP); KIGA, Daigo, Kakogawa-shi Hyogo 675-0019 (JP)
(74) Representative: Kramer Barske Schmidtchen Patentanwälte PartG mbB
(86) International application number: PCT/JP2015/062739
(87) International publication number: WO 2015/182318

(56) References cited:
- EP-A1- 1 679 146
- EP-A1- 2 578 344
- EP-A2- 1 127 653
- WO-A1-2011/148781
- WO-A1-2014/065074
- WO-A1-2014/065074
- WO-A1-2014/065357
- JP-A- 2011 247 459

## Description

### TECHNICAL FIELD

The present invention relates to a heat-exchanger tube, to a method for manufacturing a heat exchanger in which the heat-exchanger tube is used, and to a brazing paste that is used in brazing the heat exchanger.

### BACKGROUND ART

Aluminum alloys that are lightweight and have high thermal conductivity are frequently used in automobile heat exchangers, such as in evaporators and condensers. A heat exchanger comprises tubes, through which a refrigerant flows, and fins for exchanging heat between the refrigerant and air on the outer side of the tubes; the tubes and the fins are joined by brazing. A fluoride flux is often used in the joining of the tubes and the fins.

If a perforation occurs in a tube used in the automobile heat exchanger owing to corrosion during use, then refrigerant will leak out and, consequently, the heat exchanger will no longer be able to serve its function. Therefore, for the purpose of increasing corrosion resistance, a sacrificial-anode layer is formed on the surface of each tube. Conventionally, as a method that forms the sacrificial-anode layer, a method is used in which Zn (zinc) is adhered beforehand to the tube surface by thermal spraying or the like, and the Zn diffuses by heating during brazing. According to such a method, a Zn-diffusion layer, which constitutes a sacrificial anode, is formed on the tube surface after the brazing, which makes it possible to inhibit the progress of corrosion in the plate-thickness direction.

Nevertheless, in the above-mentioned method, an operation that adheres Zn onto the surface of the tube beforehand becomes necessary. In addition, if the above-mentioned method is used, then a filler material must be provided on the fin side, and therefore it is necessary to manufacture the fins using cladding material cladded with filler material. Consequently, it is difficult to reduce the manufacturing cost, the materials cost, etc.

A technique has been proposed (Patent Document 1) to solve these problems, wherein a flux layer that contains an Si (silicon) powder, a Zn-containing flux, and a binder is formed on the outer surface of the tube. The flux layer having the above-mentioned composition can be adhered simultaneously with all the filler material, Zn, and flux components in a single adhering process. In addition, because there is no need to provide filler material on the fin side, the fins can be prepared using bare-fin material. As a result, a cost reduction can be achieved.

For example, if the above-mentioned flux layer containing KZnF₃ as the Zn-containing flux is used, then the flux component and Zn are produced according to the following reaction formula.
- 6KZnF₃ + 4Al → 3KAlF₄ + K₃AlF6 + 6Zn (555°C or higher)

Based on the above reaction formula, the Zn-containing flux does not function alone as the Zn and flux components, but rather it functions as the Zn and flux components by precipitating Zn by reacting with the Al (aluminum) of the tube and by producing potassium aluminum fluorides, which are the flux components. Accordingly, if a Zn-containing flux is used, then the above-mentioned reaction progresses at the interface between the flux layer and the tube, that is, in the vicinity of the outer surface of the tube.

In addition, as a technique that simultaneously adheres all the Zn and flux components in a single adhering process, a technique has been proposed (Patent Document 2), wherein a brazing composition, which is made by mixing Si powder, Zn powder, and K-Al-F flux, is applied to the outer surface of the tube. If this brazing composition is used, then a cost reduction can be achieved, the same as mentioned above.

EP 2 578 344 A1 relates to a method for producing an aluminum alloy heat exchanger. WO 2014/065074 A1 relates to a brazing composition, a tube for a heat exchanger, and a heat exchanger.

### PRIOR ART LITERATURE

### Patent Documents

Patent Document 1 - PCT Publication No. WO 2011/090059
Patent Document 2 - Japanese Laid-open Patent Publication No. 2014-83570

### SUMMARY OF THE INVENTION

### PROBLEMS TO BE SOLVED BY THE INVENTION

To reduce the burden on the environment, there has been increasing demand in recent years to improve the fuel consumption of automobiles by reducing the weight of the component parts. From such a viewpoint, with regards to heat-exchanger tubes whose wall thickness is thinner than in the conventional art, there is strong demand for corrosion resistance that is higher than in the conventional art. This means that a more highly concentrated, deeper Zn-diffusion layer must be formed by adhering a larger amount of Zn to the tube surface than in the conventional art and then heating such, thereby increasing the corrosion-protection life span by a sacrificial anode.

Nevertheless, according to the technique of Patent Document 1, because it would be necessary to increase the content of the Zn-containing flux that is adhered to the tube, the entire flux layer would become thick. In this case, because the Zn-containing flux reaction will proceed at the outer surface of the tube as described above, there would be a problem in that unreacted Zn-containing flux will remain in the vicinity of a surface-layer part of the flux layer, which unreacted Zn-containing flux is separated from the outer surface of the tube. This means that, even if a large amount of the Zn-containing flux is applied, there is a limit to the formation of a highly-concentrated, deep Zn-diffusion layer on the outer surface of the tube, which means that it is not expected to increase corrosion resistance.

On the other hand, in the technique of Patent Document 2, the total amount of oxide film present on the surface of the Zn powder increases in proportion to the content of the Zn powder. Therefore, in the technique of Patent Document 2, if an attempt is made to make the total amount of Zn in the flux layer the same as in the technique of Patent Document 1, then it is necessary to increase the content of the K-Al-F flux in order to eliminate the oxide film present on the surface of the Zn powder. As a result of the above, the present inventors discovered that the total amount of Si powder, Zn powder, and K-Al-F flux contained in the flux layer becomes greater than in the case of Patent Document 1. If the total amount of these powders and the flux is large, then the flux layer becomes thick, and consequently, when brazing is performed to join the tube and the fin, a clearance between the tube and the fin, which results when the flux layer melts due to the heating, becomes large, and, in turn, the dimensions of the entire heat exchanger are adversely reduced. Accordingly, to prevent such problems, it is preferable to make the thickness of the flux layer as thin as possible.

The present invention was conceived against this background, and an object of the present invention is to provide a heat-exchanger tube that has superior corrosion resistance, can prevent dimensional changes during brazing, and in which it is easy to reduce weight and cost; to provide a heat exchanger that uses the heat-exchanger tube; and to provide a brazing paste that is used in the manufacture of the heat exchanger.

### MEANS FOR SOLVING THE PROBLEMS

In one aspect, the present invention provides a heat-exchanger tube according to claim 1.

In another aspect, the present invention provides a method for manufacturing a heat exchanger according to claim 11.

In yet another aspect, the present invention provides a brazing paste according to claim 12. Further embodiments of the present invention are set out in the dependent claims.

### EFFECTS OF THE INVENTION

The heat-exchanger tube (hereinbelow, called the "tube" where appropriate) comprises the tube main body composed of an aluminum alloy. Consequently, the tube is lightweight and has superior thermal conductivity.

In addition, the coating includes the powder mixture, which includes the four types of powders, that is, the Si (silicon) powder, the Zn (zinc) powder, the first flux powder, and the second flux powder. These four types of powders each exhibit their respective characteristics; in addition, they exhibit synergistic effects by interacting with one another, and thereby superior brazeability and corrosion resistance can be easily achieved.

That is, owing to the heating during brazing, the Si powder included in the above-mentioned powder mixture reacts with the Al of the above-mentioned tube main body, and thereby liquid-phase filler material composed of an Al-Si alloy can be produced. Thereby, the above-mentioned tube and the above-mentioned fin can be joined together.

Because the above-mentioned first flux powder consists of a K-Zn-F compound, it reacts with the Al of the above-mentioned tube main body, owing to the heating during brazing, to produce the flux component(s) and Zn. Thereby, brazing becomes possible and the Zn diffuses into the above-mentioned tube main body to form a Zn-diffusion layer. Furthermore, owing to the formation of the Zn-diffusion layer, an electric-potential gradient can be formed in which, from the surface to a deep part of the above-mentioned tube main body, the surface becomes a lower potential and the deep part becomes a higher potential, and thus the surface-layer part serves as a sacrificial anode and the deep part can be protected against corrosion.

Nevertheless, as described above, because the reaction of the first flux powder proceeds at the outer surface of the tube main body, if the content of the first flux powder is made large in order to obtain higher corrosion resistance, then the coating as a whole becomes thick. As a result, the first flux powder would tend to remain in an unreacted state in the vicinity of the surface-layer part of the coating, which is separated from the outer surface of the tube main body. Thus, even if the content of the first flux powder is increased, it is difficult to form, on the surface of the tube main body, a Zn-diffusion layer that has a high concentration and is deep.

In the present invention, in order to compensate for the insufficiency of the Zn amount while preventing the unreacted first flux powder from remaining, the content of the first flux powder is reduced, and the Zn amount that has become insufficient due to the reduction of the first flux powder is compensated for by the Zn powder. In addition, in the present invention, the oxide film remaining on the surface of the Zn powder is eliminated during brazing, and the second flux powder is further admixed in order to wet the surface of the tube main body.

In the present invention, the powder mixture has the above-specified composition, and thereby, in addition to the Zn produced by the first flux powder reacting with the Al of the tube main body, the Zn produced by the melting of the Zn powder also diffuses into the tube main body. As a result, a Zn-diffusion layer that has a high concentration and is deep can be formed on the surface of the tube main body, and thereby corrosion resistance can be increased.

On the other hand, if an attempt were to be made to obtain the Zn amount needed to form the Zn-diffusion layer by mixing the second flux powder and the Zn powder without using the first flux powder, then a large amount of the Zn powder would be needed. Attendant with that, because the total amount of the oxide film of the Zn powder also would increase, it would be necessary to increase the content of the second flux powder to eliminate that increased portion of the oxide film. In the present invention, by admixing the above-mentioned first flux powder, the content of the Zn powder can be decreased. As a result, in addition to the Zn powder, the content of the second flux powder also can be decreased and, in turn, the total amount of the powder mixture can be decreased. Furthermore, the coating as a whole can be made thin by reducing the total amount of the powder mixture and, when brazing is performed, the clearance between the tube and the fin, which is created by the melting of the above-mentioned coating due to the heating, can be decreased. As a result, it is possible to prevent a decrease in the dimensions of the overall core of the resulting heat exchanger.

As described above, the tube has superior corrosion resistance because a Zn-diffusion layer that has a high concentration and is deep can be easily formed. In addition, the wall thickness of the tube can be made thin while ensuring sufficient corrosion resistance, and thereby the tube easily can be made lightweight. Therefore, the tube can be suitably used, for example, for use in automobiles, which are in severely corrosive environments.

In addition, in the heat exchanger, the heat-exchanger tube, and the fin and header, which are composed of aluminum alloy, are joined by brazing. Therefore, as described above, it has superior corrosion resistance and easily can be made lightweight.

### BRIEF DESCRIPTION OF THE DRAWINGS

FIG. 1 is an oblique view of a heat-exchanger tube according to working example 1.
FIG. 2 is an oblique view of a heat exchanger that was prepared using the heat-exchanger tube according to working example 1.

### MODES FOR CARRYING OUT THE INVENTION

The configuration of the above-mentioned tube is explained in detail below.

### (Tube Main Body)

The configuration of the tube main body is not particularly limited and can be selected as appropriate in accordance with the application, the required characteristics, etc. For example, the tube main body can be formed by extrusion and can be configured as an extruded multi-hole pipe having a plurality of refrigerant passageways internally. In addition, the tube main body may have a shape such as a simple tube shape. In this case, the tube main body may be manufactured by extrusion or may be manufactured by bending a plate material.

The tube main body is composed of an aluminum alloy. Here, the above-mentioned "aluminum alloy" is a general term that includes both pure aluminum and aluminum alloys. Aluminum alloys of various chemical compositions can be utilized as the aluminum alloy used in the tube main body.

For example, a chemical composition that is restricted to Cu: 0.05% (mass%, likewise below) or less, the balance being Al and unavoidable impurities, can serve as the chemical composition of the above-mentioned aluminum alloy. The preferred content ranges and the like of each element based on this chemical composition are explained below.

### • Cu (Copper): 0.05% or less

Cu is mixed in, to a certain extent, as an unavoidable impurity. If the Cu content of the tube main body is large, then there is a risk that the intrinsic corrosion resistance of the tube main body will decrease. Consequently, from the viewpoint of increasing corrosion resistance, the Cu content is preferably restricted to 0.05% or less.

It is known in the conventional art that, when Zn is added to Al, the electric potential is made lower, and when Cu or Si is added, the electric potential is made higher. The present inventors discovered that, in the case in which Zn, Cu, and Si coexist, the effect of making the electric potential higher-owing to the synergistic effect of Cu and Si-becomes large as compared to the case in which Cu or Si are present alone; therefore it becomes difficult to obtain the effect of increasing corrosion resistance using Zn.

That is, if brazing is performed using the above-mentioned tube, a Zn-diffusion layer is formed by the diffusion of Zn in the depth direction from the surface of the tube main body. Furthermore, simultaneous with the diffusion of Zn, Si supplied from Si particles also diffuses in the depth direction, and thereby an Si diffusion layer is formed. Consequently, if the Cu content included in the tube main body is excessively large with respect to the Zn concentration in the above-mentioned Zn-diffusion layer, then the effect of Zn making the electric potential lower is offset by the effect of the Si diffusion layer and Cu making the electric potential higher; therefore it becomes difficult to make the electric potential on the surface side of the tube main body much lower than the electric potential of the deep part.

On the other hand, if the amount of Zn powder in a coating is increased in order to make the effect of Zn causing the electric potential to be lower to be greater than the effect of the Si diffusion layer and Cu making the electric potential higher, then the total amount of the oxide film present on the surface of the Zn powder also increases. In this case, the content of the above-mentioned second flux powder must be increased in order to eliminate that portion of the oxide film that was added, and consequently the above-mentioned coating becomes thick. As a result, the clearance between the above-mentioned tube and the above-mentioned fin created by the melting of the above-mentioned coating due to the heating becomes large, and consequently there is a risk that the decrease in the dimensions of the entire core of the heat exchanger will become excessive.

Accordingly, to avoid such a problem and to increase corrosion resistance, it is necessary to both increase the intrinsic corrosion resistance of the tube main body by decreasing the Cu content and to form an electric-potential gradient in which the surface side of the tube main body is a sufficiently lower potential than that of the deep part. By restricting the Cu content to 0.05% or less, such an electric-potential gradient can be implemented and thereby corrosion resistance increased. From the same viewpoint, it is more preferable to restrict the Cu content to 0.03% or less, and yet more preferable to restrict the Cu content to 0.01% or less.

### • Mn (Manganese): 0.1%-1.2%

The above-mentioned aluminum alloy may further contain Mn: 0.1%-1.2%. Mn functions to increase strength by solid so luting Mn in the Al matrix. By making the Mn content 0.1% or more, a sufficient strength-increasing effect can be obtained. On the other hand, if the Mn content is more than 1.2%, then workability during extrusion decreases, and consequently there is a risk that the efficiency of production of the above-mentioned tube main body will decrease. Accordingly, from the viewpoint of combining both strength and productivity, the Mn content is preferably 0.1%-1.2% and more preferably 0.2%-1.0%.

### • Zr (Zirconium): 0.01%-0.30%

The above-mentioned aluminum alloy may further contain Zr: 0.01%-0.30%. When the aluminum alloy of the tube main body recrystallizes due to the heating during brazing, Zr functions to coarsen the recrystallized grains and thereby reduce the grain-boundary density. If the Zr content is 0.01% or more, then it is possible to prevent the liquid-phase filler material of the Al-Si alloy produced during the brazing from infiltrating into the crystal-grain boundaries of the matrix and thereby to prevent preferential corrosion at the grain boundaries from occurring. On the other hand, if the Zr content is more than 0.30%, then huge crystallized products are produced during casting and there is a risk that it will become difficult to manufacture a suitable tube main body. Accordingly, the Zr content is preferably 0.01%-0.30%.

### • Cr (Chrome): 0.01%-0.30%

The above-mentioned aluminum alloy may further contain Cr: 0.01%-0.30%. Cr functions to coarsen the recrystallized grains and thereby to decrease grain-boundary density, the same as in Zr. By setting the Cr content to 0.01% or more, it is possible to prevent the occurrence of preferential corrosion at the grain boundaries. On the other hand, if the Cr content is more than 0.30%, then huge crystallized products are produced during casting, and consequently there is a risk that it will be difficult to manufacture a suitable tube main body. Accordingly, the Cr content is preferably 0.01%-0.30%.

### • Ti (Titanium): 0.01%-0.30%

The above-mentioned aluminum alloy may further contain Ti: 0.01%-0.30%. If the aluminum alloy contains Ti, then high-concentration regions, in which the Ti concentration is comparatively high, and low-concentration regions, in which the Ti concentration is comparatively low, are alternately layered in the wall-thickness direction. The low-concentration regions tend to corrode more than the high-concentration regions, and consequently the progress of corrosion in the wall-thickness direction is reduced by the formation of the low Ti concentration regions in a laminar manner. As a result, pitting-corrosion resistance and grain-boundary-corrosion resistance are increased. In addition, Ti functions to increase strength at room temperature and at high temperature. To sufficiently obtain these effects, the Ti content is preferably 0.01% or more. On the other hand, if the Ti content is more than 0.30%, then huge crystallized products are produced during casting, and consequently there is a risk that it will become difficult to manufacture a suitable tube main body. Accordingly, the Ti content is preferably 0.01%-0.30%.

### • Sr (Strontium): 0.01%-0.10%

Sr functions to refine the structure of the eutectic that crystallizes when the liquid-phase filler material solidifies during cooling and to distribute that eutectic structure evenly. This eutectic structure becomes the anode site, and consequently the corrosion configuration can be made into a planar shape by the distribution of the eutectic structure. As a result, pitting-corrosion resistance can be increased. To sufficiently obtain the effect of increasing pitting-corrosion resistance, the Sr content is preferably 0.01% or more. On the other hand, if the Sr content is more than 0.10%, then Al-Si-Sr compounds crystallize, and consequently there is a risk that the refinement of the eutectic structure will become insufficient. Accordingly, the Sr content is preferably 0.01%-0.10%.

### • Si (Silicon): 0.05%-0.30%

By coexisting with Mn, Si precipitates an Al-Mn-Si intermetallic compound as heating is applied during brazing. The Al-Mn-Si intermetallic compound functions to coarsen the recrystallized grains, which makes it possible to reduce the grain-boundary density of the aluminum alloy. If the Si content is 0.05% or more, then Al-Mn-Si intermetallic compounds can be sufficiently precipitated. As a result, the liquid-phase filler material produced during brazing can be prevented from infiltrating the crystal-grain boundaries of the aluminum alloy, and thereby the occurrence of preferential corrosion at the grain boundaries can be further inhibited. On the other hand, if the Si content is more than 0.30%, then the electric potential of the tube main body becomes higher owing to solid so luting Si, and consequently there is a risk that corrosion resistance will decrease. Accordingly, the Si content is preferably 0.05%-0.30%.

Zr, Cr, Ti, and Sr may be added independently or as a composite. If these elements are added as a composite, then the additive effects of the elements can be obtained.

### • Homogenization Treatment

If the tube main body is manufactured by extrusion using an aluminum alloy that contains Mn, then it is preferable to use an aluminum alloy that has been subjected to a homogenization treatment under the conditions below.

In a first aspect of the homogenization treatment, a homogenization treatment is performed in which an aluminum alloy ingot having the above-mentioned chemical composition is held at a temperature of 400°C-650°C for 2 hours or more. In this case, the coarse crystallized products formed during casting are decomposed or granulated, and thereby it is possible to homogenize the heterogeneous structures, such as segregation layers, produced during casting. As a result, resistance during extrusion can be reduced and thereby extrudability can be increased. In addition, the surface roughness of the product after extrusion can be reduced.

If the hold temperature in the homogenization treatment is below 400°C, then there is a risk that coarse crystallized products, the above-mentioned heterogeneous structures, or the like will remain, and there is a risk that such will lead to a decrease in extrudability, an increase in surface roughness, or the like. The higher the hold temperature in the homogenization treatment, the more that the hold time can be shortened and thereby the more that productivity can be increased. However, if the hold temperature is above 650°C, there is a risk that such will lead to the melting of the ingot. Accordingly, the hold temperature in the homogenization treatment is preferably 400°C-650°C. From the same viewpoint, the hold temperature in the homogenization treatment is preferably 430°C-620°C.

In addition, from the viewpoint of sufficiently performing the homogenization, the hold time in the homogenization treatment is preferably 3 hours or more. On the other hand, if the hold time is more than 24 hours, then the homogenization effect becomes saturated, and consequently it is difficult to obtain an effect commensurate with the hold time. Accordingly, the hold time in the homogenization treatment is preferably 3-24 hours.

In a second aspect of the homogenization treatment, a first homogenization treatment, in which the ingot is held at a comparatively high temperature, and a second homogenization treatment, in which the ingot is held at a temperature lower than that of the first homogenization treatment, may be performed in combination. In this case, hot extrudability can be further increased. In addition, in the extrusion, aluminum pieces that have accumulated in the die are discharged from the die when they reach a certain size, and thereby defects are produced by the adhesion of these aluminum pieces to the surface of the tube; however, the number of the above-mentioned defects can be reduced by utilizing the above-mentioned second aspect.

The first homogenization treatment is preferably performed by holding the ingot at a temperature of 550°C-650°C for 2 hours or more. In this case, the coarse crystallized products formed during casting not only decompose or granulate but can also actively form solid solutes. Solid solute formation tends not to progress if the hold temperature in the first homogenization treatment is below 550°C. The higher the hold temperature in the first homogenization treatment, the shorter that the hold time becomes and thereby the more that the productivity can be increased. However, if the hold temperature in the first homogenization treatment is above 650°C, then there is a risk that the ingot will melt. Accordingly, the hold temperature in the first homogenization treatment is preferably 550°C-650°C. From the same viewpoint, the hold temperature in the first homogenization treatment is more preferably 580°C-620°C.

In addition, by making the hold time in the first homogenization treatment 2 hours or more, solid soluting of the crystallized products can be implemented sufficiently. If the hold time is less than 2 hours, then the above-mentioned effect becomes insufficient. On the other hand, if the hold time is more than 24 hours, then it is difficult to obtain an effect commensurate with the hold time. Accordingly, the hold time in the first homogenization treatment is preferably 2 hours or more and is more preferably 3-24 hours.

The second homogenization treatment is preferably performed by holding the ingot at a temperature of 400°C-550°C for 3 hours or more. In this case, the Mn that is solid soluted in the matrix is precipitated, and thereby the amount of solid solutes of Mn can be reduced. As a result, the deformation resistance in the extrusion decreases and thereby extrudability can be increased. If the hold temperature in the second homogenization treatment is below 400°C, then the amount of precipitated Mn becomes small, and consequently there is a risk that the effect of decreasing deformation resistance will become insufficient. On the other hand, if the hold temperature in the second homogenization treatment is above 550°C, then the Mn tends not to precipitate, and consequently there is a risk that the effect of decreasing deformation resistance will become insufficient.

In addition, by setting the hold time in the second homogenization treatment to 3 hours or more, Mn can be sufficiently precipitated. If the hold time is less than 3 hours, then Mn precipitation becomes insufficient and consequently there is a risk that the effect of reducing deformation resistance will become insufficient. From the viewpoint of increasing extrudability, the hold time preferably is made long; however, if the hold time is more than 24 hours, then it is difficult to obtain an effect commensurate with the hold time. Accordingly, the hold time in the second homogenization treatment is preferably 3 hours or more, is more preferably 3-24 hours, and is yet more preferably 5-15 hours.

In the above-mentioned second aspect, the first homogenization treatment and the second homogenization treatment may be performed successively, or the ingot may be temporarily cooled between the first homogenization treatment and the second homogenization treatment. In either case, the above-mentioned effect can be obtained. Furthermore, performing the first homogenization treatment and the second homogenization treatment successively means that, after the first homogenization treatment is complete, the second homogenization treatment is started without cooling the ingot to a temperature lower than the hold temperature in the second homogenization treatment. If the ingot is cooled after the first homogenization treatment, then the second homogenization treatment can be performed by, for example, reheating the ingot after cooling it to 200°C or lower.

### (Coating)

The coating present on the surface of the tube main body contains a powder mixture-which contains an Si powder, a Zn powder, a first flux powder consisting of a K-Zn-F compound, and a second flux powder consisting of a K-Al-F compound -- and a binder. The coating can be formed by applying a paste, in which the powder mixture and the binder are mixed in a solvent, onto the tube main body and then drying the solvent. The application of the paste can be performed by, for example, a roll-coating method or the like.

### • Powder Mixture: 30 g/m² or less

The total amount of the powder mixture contained in the coating is 30 g/m² or less. If the total amount of the powder mixture is more than 30 g/m², then the reduction of the volume caused by the melting of the powder mixture during brazing becomes excessively large. As a result, the clearance between the tube main body and the fin becomes large, and consequently there is a risk that the dimensions of the heat exchanger after brazing will shrink excessively. To avoid such a problem and from the viewpoint of increasing the dimensional accuracy of the resulting heat exchanger, the total amount of the powder mixture contained in the coating is 30 g/m² or less.

### • Si Powder: 2 g/m² or more and 6 g/m² or less

The Si powder reacts with the Al of the tube main body owing to the heating during brazing, thereby producing liquid-phase filler material composed of an Al-Si alloy. Thereby, the tube can be joined to the fin, the header, etc.

The Si powder content is 2 g/m² or more and 6 g/m² or less. If the Si powder content is less than 2 g/m², then the amount of liquid-phase filler material becomes insufficient, and consequently joint failures tend to occur. On the other hand, if the Si powder content is more than 6 g/m², then the proportions of the Zn powder, the first flux powder, and the second flux powder with respect to the overall powder mixture become excessively small, and consequently the amount of Zn diffused into the tube main body, the total amount of the flux component, etc. become insufficient. As a result, there is a risk that problems, such as a decrease in corrosion resistance or a decrease in brazeability, will occur.

In addition, in this case, there is a risk that problems, such as the Si powder being unable to react with the Al of the tube main body and therefore remaining in the liquid-phase filler material, or the corrosion of the tube main body becoming remarkable as the liquid-phase filler material is produced, will occur. From the viewpoint of avoiding such problems, the Si powder content is 2 g/m² or more and 6 g/m² or less.

The maximum particle size of the Si powder is preferably 100 µm or less, more preferably 75 µm or less, yet more preferably 50 µm or less, and in particular preferably 35 µm or less. If coarse Si powder is present, then there is a risk that melt holes will be produced owing to local melting of the Al-Si eutectic during brazing. By restricting the maximum particle size of the Si powder to the above-specified ranges, the fluidity of the liquid-phase filler material produced during the addition of heat in brazing can be increased, and the formation of melt holes can be prevented by preventing erosion of the tube main body.

Furthermore, the maximum particle size of the Si powder is set to a value that is measured by a laser diffraction method. This applies likewise to the Zn powder, which is described below.

### • Zn Powder: 0.2 g/m² or more and 4.0 g/m² or less

The Zn powder functions as a Zn source for forming the Zn-diffusion layer on the surface of the tube main body. By using it in combination with the first flux component as the Zn sources, the Zn powder can form a Zn-diffusion layer that has a high concentration and is deep. In addition, as described above, by using the Zn powder in combination with the first flux powder, the total amount of the powder mixture can be reduced, and thereby a decrease in the dimensions of the overall core of the heat exchanger can be prevented.

The Zn powder content is 0.2 g/m² or more and 4.0 g/m² or less. If the Zn powder content is less than 0.2 g/m², then the amount of Zn that diffuses into the tube main body becomes insufficient, even considering the amount of the Zn supplied from the first flux powder, and this leads to a decrease in corrosion resistance. If the Zn powder content is more than 4.0 g/m², then the Zn concentration of the fillet formed at the junction with the fin becomes excessively high, and consequently preferential corrosion tends to occur more in the fillet than in the Zn-diffusion layer of the tube main body. As a result, there is a risk that the fin will detach at an early stage owing to corrosion. Accordingly, from the viewpoint of both increasing corrosion resistance and preventing the detachment of the fin, the Zn powder content is 0.2 g/m² or more and 4.0 g/m² or less. From the same viewpoint, the Zn powder content is preferably 0.2 g/m² or more and 3.8 g/m² or less.

The maximum particle size of the Zn powder is preferably 100 µm or less, more preferably 50 µm or less, yet more preferably 30 µm or less, and in particular preferably 15µm or less. If coarse Zn powder is present, then there is a risk that melt holes will occur owing to local melting of the Al-Zn eutectic during brazing. By restricting the maximum particle size of the Zn powder to the above-specified ranges, the formation of melt holes can be prevented. In addition, if the maximum particle size of the Zn powder is in the above-specified ranges, then the liquid phase Zn tends to spread evenly when the Zn particles melt, and consequently the Zn-diffusion layer formed on the tube main body tends to become even.

### • First Flux Powder: 0.5 g/m² or more and 5.0 g/m² or less

The first flux powder consists of a K-Zn-F compound. As described above, the first flux powder produces the flux component(s) and Zn by reacting with the Al of the tube main body. By using it in combination with the Zn powder and the second flux powder, the first flux powder can reduce the total amount of the powder mixture while maintaining the amount of Zn and the amount of flux supplied, as described above; in turn, the thickness of the coating can be reduced. In addition, the oxide film present on the surface of the Zn powder is effectively eliminated, and consequently a Zn-diffusion layer that has a high concentration and is deep can be formed.

To obtain the effect of reducing the thickness of the coating and to completely react with the Al of the tube main body, the content of the first flux powder is 0.5 g/m² or more and 5.0 g/m² or less. If the content of the first flux powder is less than 0.5 g/m², then the thickness of the coating cannot be sufficiently reduced. On the other hand, if the content of the first flux powder is more than 5.0 g/m², then the coating becomes thick and unreacted first flux powder tends to remain in the vicinity of the surface-layer part of the coating. From the same viewpoint, the content of the first flux powder is preferably 0.5 g/m² or more and less than 3.0 g/m².

A K-Zn-F compound, such as KZnF₃, is used as the first flux powder. In addition, the average particle size of the first flux powder is not particularly limited; for example, a first flux powder having an average particle size of approximately 5 µm can be used. It is noted that the average particle size is set to a value that is measured by a laser diffraction method. This applies likewise to the second flux powder, which is described below.

### • Second Flux Powder: 5 g/m² or more and 20 g/m² or less

The second flux powder consists of a K-Al-F compound. By using it in combination with the first flux powder and the Zn powder, the second flux powder can easily achieve both a reduction in the total amount of the powder mixture and the formation of a Zn-diffusion layer that has a high concentration and is deep, as described above.

The content of the second flux powder is 5 g/m² or more and 20 g/m² or less. If the content of the second flux powder is less than 5 g/m², then, even considering the amount of the flux component produced by the first flux powder, the total amount of the flux component becomes insufficient, and consequently brazeability decreases. In addition, in this case, there is a risk that the effect of eliminating the oxide film on the Zn powder surface will become insufficient, and consequently there is a risk that corrosion resistance will decrease. If the content of the second flux powder is more than 20 g/m², then the effect of eliminating the oxide film on the Zn powder, the tube main body, and the like will become saturated and, moreover, the total amount of the powder mixture will become excessive, and consequently the thickness of the coating cannot be sufficiently reduced. Accordingly, to reduce the thickness of the coating while ensuring brazeability, the content of the second flux powder is 5 g/m² or more and 20 g/m² or less. From the same viewpoint, it is preferably 6 g/m² or more and 18 g/m² or less.

A K-Al-F compound, such as KAlF₄, K₂AlF₅, or K₃AlF₆, is used as the second flux powder. These compounds may be used alone or in combination. The average particle size of the second flux powder is not particularly limited; for example, a second flux powder having an average particle size of approximately 5 µm can be used.

### • Binder: 5-40 mass%

For example, an acrylic resin, a urethane resin, or the like can be used as the binder. The proportion of the binder content with respect to the overall coating (with respect to 100 mass% of the total amount of the above-mentioned powder mixture and binder) is 5-40 mass%. If the binder content is less than 5 mass%, then detachment of the coating tends to occur. On the other hand, if the binder content is more than 40 mass%, then the thermal decomposition of the binder becomes insufficient, and there is a risk that undecomposed binder and the like will remain when brazing is performed. As a result, there is a risk that brazeability will be decreased.

### (Paste)

The paste for forming the above-mentioned coating contains the above-mentioned Si powder, the above-mentioned Zn powder, the above-mentioned first flux powder, the above-mentioned second flux powder, and the above-mentioned binder. In addition, the paste may contain a solvent or the like in order to adjust the coatability onto the tube-main-body part. The preferred aspects of these powders are as described above.

The content of each component in the paste can be appropriately set such that it is in the above-specified ranges in the above-mentioned coating state. That is, the content of the Si powder, the content of the Zn powder, the content of the first flux powder, and the content of the second flux powder are set to 2 part by mass or more and 6 parts by mass or less, 0.2 parts by mass or more and 4.0 parts by mass or less, 0.5 parts by mass or more and 5.0 parts by mass or less, and 5 parts by mass or more and 20 parts by mass or less, respectively. In addition, the binder content is 5 mass% or more and 40 mass% with respect to the total mass of the above-mentioned four types of powders and the binder.

In addition, as described above, from the viewpoint of obtaining the effect of reducing the thickness of the coating and completely reacting with the Al of the tube main body, the content of the first flux powder in the paste is preferably 0.5 parts by mass or more and less than 3.0 parts by mass.

### (Heat Exchanger)

The heat exchanger, in which tubes having the configuration described above are used, can be prepared by bringing fins, which are composed of aluminum alloy, into contact with the coating, then assembling other members, such as headers, and then heating and brazing these. The atmosphere, heating temperature, and times during brazing are not particularly limited, and the brazing method is also not particularly limited.

Any well-known alloy can be used as the aluminum alloy used in the fins, as long as it has a strength and corrosion resistance sufficient for use in the heat exchanger.

### Working Examples

### (Working Example 1)

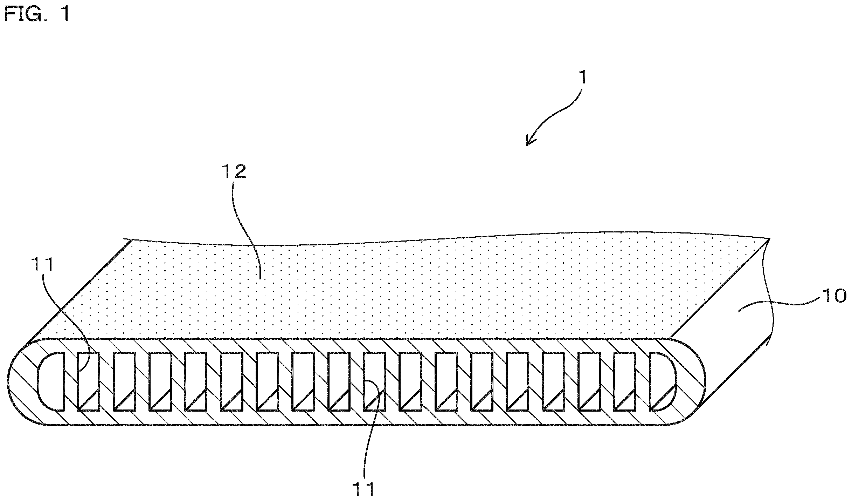

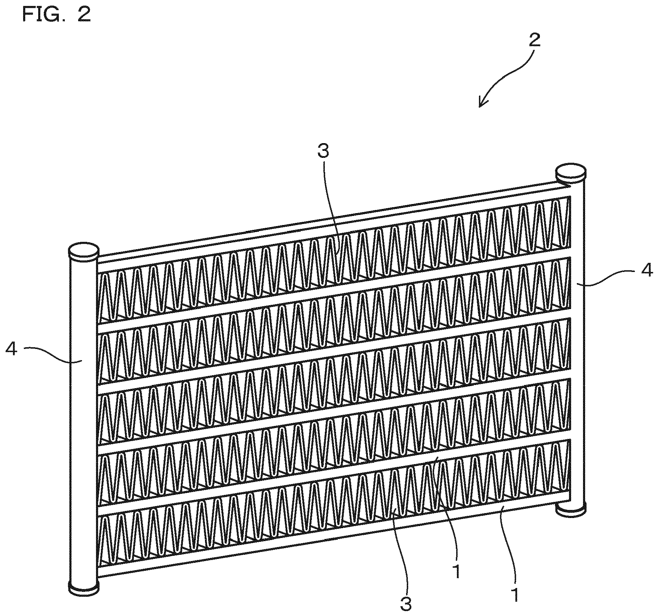

Working examples of the above-mentioned heat-exchanger tubes, and heat exchangers manufactured by using the above-mentioned heat-exchanger tubes, are explained below. In the present example, tubes 1 shown in FIG. 1 were prepared using 11 types of alloys A1-A11 having the chemical compositions shown in Table 1. Subsequently, heat exchangers 2 shown in FIG. 2 were assembled using the resulting tubes 1, and the brazeability and corrosion resistance of the resulting 11 types of heat exchangers 2 were evaluated. The details are explained below.

### <Preparation of Tubes 1>

Billets having the chemical compositions shown in Table 1 were each heated at 600°C for 10 hours to perform a homogenization treatment. After the homogenization treatment was completed, the billets were cooled to room temperature and then reheated to 450°C and hot extrusion was performed. By the above, tube main bodies 10, each comprising a plurality of refrigerant passageways 11 and having a cross section perpendicular to the extrusion direction that exhibits a flat shape, were manufactured, as shown in FIG. 1.

Separate from the manufacture of the tube main bodies 10, a paste for forming coatings 12 was prepared by mixing the Si powder, the Zn powder, the first flux powder, the second flux powder, and the binder with a solvent.

The above-mentioned paste was applied, using a roll coater, to the flat surfaces of each tube main body 10 obtained as mentioned above. Subsequently, the solvent was removed by drying the paste, thereby forming the coating 12 on each tube main body 10. It is noted that the content of each component of each coating 12 is as below.
- Si powder (maximum particle size of 15 µm): 4 g/m²
- Zn powder (maximum particle size of 15 µm, average particle size of 3.4 µm): 1.5 g/m²
- First flux powder (KZnF₃): 2.5 g/m²
- Second flux powder (a mixture of KAlF₄ powder and K₃AlF₆ powder): 9 g/m²
- Binder: 25 mass% of overall coating

The tubes 1 as shown in FIG. 1 were obtained by the above.

### <Preparation of Fins 3>

Fins 3, having a corrugated shape, were prepared by corrugating plate materials, each composed of an Al(1.2%)-Mn(1.5%)-Zn alloy and having a thickness of 0.1 mm. It is noted that the fin pitch was set to 3 mm, and the fin height was set to 7 mm.

### <Preparation of Headers 4>

Brazing sheets, each made of an aluminum alloy and clad with a filler material, were each formed into a pipe shape such that the filler material was on the outer side. Subsequently, holes, into which the tubes were inserted, were formed on a side surface. By the above, the headers 4 were obtained.

### <Assembly of Heat Exchangers 2>

Both ends of each tube 1 were inserted into the headers 4 while alternately stacking the tubes 1 and the fins 3, thereby assembling the prescribed shape shown in FIG. 2. By heating and brazing in this state, the tubes 1, the fins 3, and the headers 4 were joined, and thereby the heat exchangers 2 were obtained. Furthermore, the brazing was performed in a nitrogen-gas atmosphere, the temperature of the tubes 1, the fins 3, and the headers 4 was increased to 600°C at a temperature-increase rate of an average of 50°C/min, and the temperature of 600°C was held for 3 min, after which the temperature was lowered to room temperature.

Brazeability and corrosion resistance were evaluated using the 11 types of heat exchangers 2 (test bodies 1-11) obtained by the above. The evaluating methods are explained in detail below.

### <Brazeability Evaluation>

The joined state of the fins 3, the presence/absence of external-appearance defects such as discoloring, and the presence/absence of melting of the fins 3 were checked by visual observation. The results thereof are shown in Table 2. Furthermore, those for which there was no problem in the visual observation are denoted in Table 2 as "Good."

### <Corrosion-Resistance Evaluation>

The SWAAT test stipulated in ASTM G85 Annex A3 was performed for 1000 hours on each test body. After the tests were complete, the maximum corrosion depth was measured by observing a cross section of each sample using a microscope, and the presence/absence of the detachment of the fins 3 was judged visually. The results thereof are shown in Table 2. It is noted that those having a maximum corrosion depth of 0.05 mm or less were judged to be "A+," those having a maximum corrosion depth of more than 0.05 mm and less than 0.10 mm were judged to be "A," those having a maximum corrosion depth of more than 0.10 mm and less than 0.20 mm were judged to be "B," and those having a maximum corrosion depth of more than 0.20 mm were judged to be "C."

As can be understood from Table 1 and Table 2, test bodies 1-11 showed satisfactory results for both brazeability and corrosion resistance. In particular, test body 1 and test bodies 6-9 showed superior corrosion resistance because they contain Zr, Cr, Ti, or Sr in addition to Mn, Cu and Si and because the content of these elements are within the above-specified ranges.

### (Working Example 2)

The present example is an example of heat exchangers 2 in which the content of each component in the coating 12 was modified by modifying the composition of the paste for forming the coating 12. In the present example, the tube main bodies 10 were prepared using alloy A1 in working example 1, and the tubes 1 were obtained by forming coatings B1-B25 having the compositions shown in Table 3; otherwise, the heat exchangers 2 were prepared the same as in working example 1. Using the resulting 25 types of heat exchangers 2 (test bodies 21-45), brazeability and corrosion resistance were evaluated the same as in working example 1. The results thereof are shown in Table 4. Examples B1 and B2 in tables 3 and 4 represent reference examples due to their Si powder content.

As can be understood from Table 3 and Table 4, test bodies 21-35 show satisfactory results for both brazeability and corrosion resistance because coatings B1-B15 having the above-specified compositions were used.

In test body 36, a portion was created at which a fin 3 and a tube 1 could not be joined because coating B16, which has a low Si powder content, was used, and consequently the joint failed.

In test body 37, liquid-phase filler material was excessively produced because coating B17, which has a high Si powder content, was used. As a result, melting of a fin 3 after brazing was confirmed.

Test body 38 shows corrosion resistance equivalent to test body 28, which has approximately the same total amount of Zn. Nevertheless, the content of the first flux powder in test body 38 is low, and consequently the total amount of the powder mixture in test body 38 is greater than that in test body 28. As a result, shrinkage of the dimensions of the heat exchanger after brazing became excessively large.

In test body 39, coating B19, in which the content of the first flux powder is high, was used, and consequently unreacted first flux powder remained after brazing and produced discoloring.

In test body 40, coating B20, in which the content of the second flux powder is low, was used; consequently a portion was created in which a fin 3 and a tube 1 could not be joined; therefore, the joint failed. In addition, discoloring occurred in test body 40.

In test body 41, coating B21, in which the content of the second flux powder is high and the total amount of the powder mixture is more than 30 g/m², was used; consequently, shrinkage of the dimensions of the heat exchanger after brazing became excessively large.

In test body 42, coating B22, in which the Zn powder content is low, was used, and consequently corrosion resistance was insufficient.

In test body 43, coating B23, in which the Zn powder content is high, was used, and consequently preferential corrosion of the fillet occurred and detachment of a fin 3 occurred.

In test body 44, coating B24, in which the binder content is low, was used, and consequently peeling of the coating occurred when assembling the tube main bodies 10 into the heat exchanger. As a result, a fin 3 had joint failure.

In test body 45, coating B25, in which the binder content is high, was used, and consequently the fluidity of the liquid-phase filler material during brazing decreased. As a result, a fin 3 had joint failure. In addition, discoloring of the surfaces of the tubes 1 caused by un-decomposed binder residue was observed.

**Table 1 (underlined values are non-preferred values)**

| Alloy | Chemical Composition (mass%) | | | | | | | |
|---|---|---|---|---|---|---|---|---|
| | Mn | Cu | Zr | Cr | Ti | Sr | Si | Al |
| A1 | 0.82 | 0.05 | 0.03 | <0.01 | <0.01 | <0.01 | 0.12 | Bal. |
| A2 | 0.05 | 0.03 | <0.01 | <0.01 | <0.01 | <0.01 | 0.03 | Bal. |
| A3 | 0.39 | 0.05 | <0.01 | <0.01 | <0.01 | <0.01 | 0.03 | Bal. |
| A4 | 0.82 | 0.04 | <0.01 | <0.01 | <0.01 | <0.01 | 0.20 | Bal. |
| A5 | 0.97 | 0.03 | <0.01 | <0.01 | <0.01 | <0.01 | 0.12 | Bal. |
| A6 | 0.74 | 0.04 | 0.13 | <0.01 | <0.01 | <0.01 | 0.12 | Bal. |
| A7 | 0.83 | 0.03 | <0.01 | 0.12 | <0.01 | <0.01 | 0.12 | Bal. |
| A8 | 0.69 | 0.02 | <0.01 | <0.01 | 0.15 | <0.01 | 0.12 | Bal. |
| A9 | 0.68 | 0.03 | <0.01 | <0.01 | <0.01 | 0.06 | 0.12 | Bal. |
| A10 | 0.97 | 0.03 | <0.01 | <0.01 | 0.02 | <0.01 | 0.03 | Bal. |
| A11 | 0.86 | 0.01 | <0.01 | <0.01 | <0.01 | 0.05 | 0.35 | Bal. |

**Table 2**

| Test Body | Alloy Used | Brazeability Evaluation | Corrosion-Resistance Evaluation | | |
|---|---|---|---|---|---|
| | | | Max. Corrosion Depth (mm) | Judgment | Presence/Absence of Detachment of Fin 3 |
| Test Body 1 | A1 | Good | 0.04 | A+ | None |
| Test Body 2 | A2 | Good | 0.11 | B | None |
| Test Body 3 | A3 | Good | 0.12 | B | None |
| Test Body 4 | A4 | Good | 0.06 | A | None |
| Test Body 5 | A5 | Good | 0.07 | A | None |
| Test Body 6 | A6 | Good | 0.03 | A+ | None |
| Test Body 7 | A7 | Good | 0.04 | A+ | None |
| Test Body 8 | A8 | Good | 0.04 | A+ | None |
| Test Body 9 | A9 | Good | 0.03 | A+ | None |
| Test Body 10 | A10 | Good | 0.08 | A | None |
| Test Body 11 | A11 | Good | 0.07 | A | None |

**Table 3**

| Coating | Powder Mixture | | | | | | | | Binder | | Amount of Coating Applied (g/m²) |
|---|---|---|---|---|---|---|---|---|---|---|---|
| | Si Powder | | First Flux Powder | Second Flux Powder | Zn Powder | | | Total Amount of Powder Mixture (g/m²) | Proportion in Coating (mass%) | Content (g/m²) | |
| | Content (g/m²) | Max. Particle Size (µm) | Content (g/m²) | Content (g/m²) | Content (g/m²) | Max. Particle Size (µm) | Avg. Particle Size (µm) | | | | |
| B1 | 1 | 13 | 2.5 | 9 | 1.6 | 14 | 3.5 | 14.1 | 15 | 2.5 | 16.6 |
| B2 | 7 | 10 | 2.5 | 10 | 1.5 | 15 | 3.2 | 21.0 | 30 | 9.0 | 30.0 |
| B3 | 3 | 97 | 2.3 | 9 | 1.0 | 14 | 3.3 | 15.3 | 25 | 5.1 | 20.4 |
| B4 | 6 | 75 | 2.4 | 8 | 1.4 | 13 | 3.5 | 17.8 | 10 | 2.0 | 19.8 |
| B5 | 4 | 31 | 2.5 | 9 | 1.5 | 13 | 3.2 | 17.0 | 35 | 9.2 | 26.2 |
| B6 | 3 | 12 | 0.5 | 11 | 1.4 | 14 | 3.3 | 15.9 | 5 | 0.8 | 16.7 |
| B7 | 4 | 12 | 1.0 | 10 | 1.3 | 13 | 3.1 | 16.3 | 30 | 7.0 | 23.3 |
| B8 | 3 | 13 | 2.8 | 9 | 3.0 | 13 | 2.9 | 17.8 | 25 | 5.9 | 23.7 |
| B9 | 3 | 12 | 3.0 | 9 | 1.3 | 13 | 3.1 | 16.3 | 20 | 4.1 | 20.4 |
| B10 | 3 | 13 | 5.0 | 8 | 1.2 | 12 | 3.0 | 17.2 | 30 | 7.4 | 24.6 |
| B11 | 4 | 13 | 2.4 | 5 | 0.2 | 13 | 3.2 | 11.6 | 40 | 7.7 | 19.3 |
| B12 | 3 | 12 | 2.2 | 19 | 3.8 | 15 | 3.5 | 28.0 | 25 | 9.3 | 37.3 |
| B13 | 5 | 10 | 2.5 | 8 | 1.4 | 98 | 15.3 | 16.9 | 25 | 5.6 | 22.5 |
| B14 | 5 | 13 | 2.3 | 9 | 1.2 | 49 | 7.7 | 17.5 | 25 | 5.8 | 23.3 |
| B15 | 3 | 12 | 2.1 | 10 | 1.3 | 30 | 5.2 | 16.4 | 25 | 5.5 | 21.9 |
| B16 | 0.7 | 12 | 2.0 | 12 | 1.7 | 15 | 3.2 | 16.4 | 25 | 5.5 | 21.9 |
| B17 | 8 | 11 | 2.1 | 10 | 1.4 | 13 | 3.3 | 21.5 | 25 | 7.2 | 28.7 |
| B18 | 3 | 14 | 0.3 | 23 | 4.0 | 12 | 3.1 | 30.3 | 25 | 10.1 | 40.4 |
| B19 | 4 | 11 | 6.0 | 10 | 1.6 | 11 | 3.0 | 21.6 | 35 | 11.6 | 33.2 |
| B20 | 5 | 12 | 2.3 | 3 | 1.5 | 11 | 3.0 | 11.8 | 25 | 3.9 | 15.7 |
| B21 | 4 | 12 | 2.1 | 23 | 1.5 | 14 | 3.3 | 30.6 | 30 | 13.1 | 43.7 |
| B22 | 3 | 14 | 2.0 | 6 | 0.1 | 14 | 3.2 | 11.1 | 30 | 4.8 | 15.9 |
| B23 | 4 | 15 | 2.5 | 18 | 4.4 | 15 | 3.6 | 28.9 | 30 | 12.4 | 41.3 |
| B24 | 6 | 12 | 2.5 | 10 | 1.3 | 13 | 3.2 | 19.8 | 3 | 0.6 | 20.4 |
| B25 | 5 | 11 | 2.0 | 10 | 1.2 | 14 | 3.2 | 18.2 | 45 | 14.9 | 33.1 |

**Table 4**

| Test Body | Coating Used | Brazeability Evaluation | Corrosion-Resistance Evaluation | | |
|---|---|---|---|---|---|
| | | | Max. Corrosion Depth (mm) | Judgment | Presence/Absence of Detachment of Fin 3 |
| Test Body 21 | B1 | Good | 0.04 | A+ | None |
| Test Body 22 | B2 | Good | 0.04 | A+ | None |
| Test Body 23 | B3 | Good | 0.07 | A | None |
| Test Body 24 | B4 | Good | 0.05 | A+ | None |
| Test Body 25 | B5 | Good | 0.04 | A+ | None |
| Test Body 26 | B6 | Good | 0.08 | A | None |
| Test Body 27 | B7 | Good | 0.07 | A | None |
| Test Body 28 | B8 | Good | 0.04 | A+ | None |
| Test Body 29 | B9 | Good | 0.05 | A+ | None |
| Test Body 30 | B10 | Good | 0.03 | A+ | None |
| Test Body 31 | B11 | Good | 0.10 | A | None |
| Test Body 32 | B12 | Good | 0.02 | A+ | None |
| Test Body 33 | B13 | Good | 0.04 | A+ | None |
| Test Body 34 | B14 | Good | 0.05 | A+ | None |
| Test Body 35 | B15 | Good | 0.05 | A+ | None |
| Test Body 36 | B16 | Fin joint failure | 0.04 | A+ | None |
| Test Body 37 | B17 | Melting of fin | 0.05 | A+ | None |
| Test Body 38 | B18 | Large dimensional shrinkage | 0.04 | A+ | None |
| Test Body 39 | B19 | Discoloring | 0.03 | A+ | None |
| Test Body 40 | B20 | Fin joint failure, discoloring | 0.04 | A+ | None |
| Test Body 41 | B21 | Large dimensional shrinkage | 0.04 | A+ | None |
| Test Body 42 | B22 | Good | 0.21 | C | None |
| Test Body 43 | B23 | Good | 0.01 | A+ | Present |
| Test Body 44 | B24 | Fin joint failure | 0.04 | A+ | None |
| Test Body 45 | B25 | Fin joint failure, discoloring | 0.05 | A+ | None |

## Claims

1. A heat-exchanger tube, comprising:
a tube main body composed of pure aluminum or an aluminum alloy; and
a coating applied onto a surface of the tube main body;
wherein
the coating contains a powder mixture, which includes: 2 g/m² or more and 6 g/m² or less of an Si powder, 0.2 g/m² or more and 4.0 g/m² or less of a Zn powder, 0.5 g/m² or more and 5.0 g/m² or less of a first flux powder consisting of a K-Zn-F compound, and 5 g/m² or more and 20 g/m² or less of a second flux powder consisting of a K-Al-F compound, and a binder;
the total amount of the powder mixture in the coating is 30 g/m² or less; and
the proportion of the binder in the coating is 5-40 mass%.

2. The heat-exchanger tube according to claim 1, wherein the content of the first flux powder is 0.5 g/m² or more and less than 3.0 g/m².

3. The heat-exchanger tube according to claim 1 or 2, wherein the first flux powder is composed of KZnF₃.

4. The heat-exchanger tube according to any one of claims 1 to 3, wherein the Si powder has a maximum particle size of 100 µm or less.

5. The heat-exchanger tube according to any one of claims 1 to 4, wherein the Zn powder has a maximum particle size of 100 µm or less.

6. The heat-exchanger tube according to any one of claims 1 to 4, wherein the Zn powder has a maximum particle size of 50 µm or less, preferably of 30 µm or less.

7. The heat-exchanger tube according to any one of claims 1 to 6, wherein the aluminum alloy has a chemical composition in which Cu is restricted to 0.05% (mass%, likewise below) or less, the balance being Al and unavoidable impurities.

8. The heat-exchanger tube according to claim 7, wherein the aluminum alloy further contains Mn: 0.1-1.2%.

9. The heat-exchanger tube according to claim 7 or 8, wherein the aluminum alloy further contains one type or two or more from among Zr: 0.01-0.30%, Cr: 0.01-0.30%, Ti: 0.01-0.30%, and Sr: 0.01-0.10%.

10. The heat-exchanger tube according to any one of claims 7 to 9, wherein the aluminum alloy further contains 0.05-0.30% of Si.

11. A method for manufacturing a heat exchanger using the heat-exchanger tube according to any one of claims 1 to 10, wherein
a fin, a header, and the heat-exchanger tube, which are composed of aluminum alloy, are joined by brazing.

12. A brazing paste used in brazing the heat-exchanger tube according to any one of claims 1 to 10, the brazing paste containing a powder mixture, which includes 2 part by mass or more and 6 parts by mass or less of an Si powder, 0.2 parts by mass or more and 4.0 parts by mass or less of a Zn powder, 0.5 parts by mass or more and 5.0 parts by mass or less of a first flux powder consisting of a K-Zn-F compound, and 5 parts by mass or more and 20 parts by mass or less of a second flux powder consisting of a K-Al-F compound, and a binder, wherein the binder content is 5-40 mass% with respect to the total of the powder mixture and the binder.

13. The brazing paste according to claim 12, wherein the content of the first flux powder is 0.5 parts by mass or more and less than 3.0 parts by mass.

## Patentansprüche

1. Wärmetauscherrohr, umfassend:
einen Rohrhauptkörper, der aus reinem Aluminium oder einer Aluminiumlegierung zusammengesetzt ist; und
eine Beschichtung, die auf einer Oberfläche des Rohrhauptkörpers aufgebracht ist;
wobei
die Beschichtung ein Pulvergemisch enthält, das umfasst: 2 g/m² oder mehr und 6 g/m² oder weniger eines Si-Pulvers, 0,2 g/m² oder mehr und 4,0 g/m² oder weniger eines Zn-Pulvers, 0,5 g/m² oder mehr und 5,0 g/m² oder weniger eines ersten Flussmittelpulvers, bestehend aus einer K-Zn-F-Verbindung, und 5 g/m² oder mehr und 20 g/m² oder weniger eines zweiten Flussmittelpulvers, bestehend aus einer K-Al-F-Verbindung, und ein Bindemittel;
wobei die Gesamtmenge des Pulvergemischs in der Beschichtung 30 g/m² oder weniger beträgt; und
der Anteil des Bindemittels in der Beschichtung 5 bis 40 Massen-% beträgt.

2. Wärmetauscherrohr nach Anspruch 1, wobei der Gehalt des ersten Flussmittelpulvers 0,5 g/m² oder mehr und weniger als 3,0 g/m² beträgt.

3. Wärmetauscherrohr nach Anspruch 1 oder 2, wobei das erste Flussmittelpulver aus KZnF₃ zusammengesetzt ist.

4. Wärmetauscherrohr nach einem der Ansprüche 1 bis 3, wobei das Si-Pulver eine maximale Teilchengröße von 100 µm oder weniger aufweist.

5. Wärmetauscherrohr nach einem der Ansprüche 1 bis 4, wobei das Zn-Pulver eine maximale Teilchengröße von 100 µm oder weniger aufweist.

6. Wärmetauscherrohr nach einem der Ansprüche 1 bis 4, wobei das Zn-Pulver eine maximale Teilchengröße von 50 µm oder weniger, vorzugsweise von 30 µm oder weniger, aufweist.

7. Wärmetauscherrohr nach einem der Ansprüche 1 bis 6, wobei die Aluminiumlegierung eine chemische Zusammensetzung aufweist, in der Cu auf 0,05 % (Massen-%, das Entsprechende gilt nachstehend) oder weniger beschränkt ist, wobei es sich bei dem Rest um Al und unvermeidbare Verunreinigungen handelt.

8. Wärmetauscherrohr nach Anspruch 7, wobei das Aluminium ferner Mn: 0,1 bis 1,2 % enthält.

9. Wärmetauscherrohr nach Anspruch 7 oder 8, wobei die Aluminiumlegierung ferner einen Typ oder zwei oder mehr von Zr: 0,01 bis 0,30 %, Cr: 0,01 bis 0,30 %, Ti: 0,01 bis 0,30 % und Sr: 0,01 bis 0,10 % enthält.

10. Wärmetauscherrohr nach einem der Ansprüche 7 bis 9, wobei die Aluminiumlegierung ferner 0,05 bis 0,30 % Si enthält.

11. Verfahren zur Herstellung eines Wärmetauschers unter Verwendung des Wärmetauscherrohrs nach einem der Ansprüche 1 bis 10, worin
eine Rippe, ein Kopfstück und das Wärmetauscherrohr, die aus einer Aluminiumlegierung zusammengesetzt sind, durch Löten verbunden werden.

12. Lötpaste, die zum Löten des Wärmetauscherrohrs nach einem der Ansprüche 1 bis 10 verwendet wird, wobei die Lötpaste ein Pulvergemisch enthält, das 2 Massenteile oder mehr und 6 Massenteile oder weniger eines Si-Pulvers, 0,2 Massenteile oder mehr und 4,0 Massenteile oder weniger eines Zn-Pulvers, 0,5 Massenteile oder mehr und 5,0 Massenteile oder weniger eines ersten Flussmittelpulvers, bestehend aus einer K-Zn-F-Verbindung, und 5 Massenteile oder mehr und 20 Massenteile oder weniger eines zweiten Flussmittelpulvers, bestehend aus einer K-Al-F-Verbindung, und ein Bindemittel umfasst, wobei der Bindemittelgehalt 5 bis 40 Massen-% in Bezug auf die Gesamtmenge des Pulvergemischs und des Bindemittels beträgt.

13. Lötpaste nach Anspruch 12, wobei der Gehalt des ersten Flussmittelpulvers 0,5 Massenteile oder mehr und weniger als 3,0 Massenteile beträgt.

## Revendications

1. Tube d'échangeur de chaleur comprenant :
un corps principal de tube composé d'aluminium pur ou d'un alliage d'aluminium ; et
un revêtement appliqué sur une surface du corps principal de tube ;
dans lequel :
le revêtement contient un mélange pulvérulent qui comprend 2 g/m² ou plus et 6 g/m² ou moins d'une poudre de Si, 0,2 g/m² ou plus et 4,0 g/m² ou moins d'une poudre de Zn, 0,5 g/m² ou plus et 5,0 g/m² ou moins d'une première poudre de fondant constituée d'un composé K-Zn-F et 5 g/m² ou plus et 20 g/m² ou moins d'une seconde poudre de fondant constituée d'un composé K-Al-F, et un liant ;
la quantité totale du mélange pulvérulent dans le revêtement est de 30 g/m² ou moins ; et
la proportion du liant dans le revêtement est de 5 à 40 % en masse.

2. Tube d'échangeur de chaleur selon la revendication 1, dans lequel la teneur en première poudre de fondant est de 0,5 g/m² ou plus et de moins de 3,0 g/m².

3. Tube d'échangeur de chaleur selon la revendication 1 ou 2, dans lequel la première poudre de fondant est composée de KZnF₃.

4. Tube d'échangeur de chaleur selon l'une quelconque des revendications 1 à 3, dans lequel la poudre de Si a une taille particulaire maximale de 100 µm ou moins.

5. Tube d'échangeur de chaleur selon l'une quelconque des revendications 1 à 4, dans lequel la poudre de Zn a une taille particulaire maximale de 100 µm ou moins.

6. Tube d'échangeur de chaleur selon l'une quelconque des revendications 1 à 4, dans lequel la poudre de Zn a une taille particulaire maximale de 50 µm ou moins, de préférence de 30 µm ou moins.

7. Tube d'échangeur de chaleur selon l'une quelconque des revendications 1 à 6, dans lequel l'alliage d'aluminium a une composition chimique dans laquelle Cu est limité à 0,05 % (% en masse, de la même manière ci-dessous) ou moins, le restant étant formé d'Al et d'impuretés inévitables.

8. Tube d'échangeur de chaleur selon la revendication 7, dans lequel l'alliage d'aluminium contient en outre du Mn : 0,1 à 1,2 %.

9. Tube d'échangeur de chaleur selon la revendication 7 ou 8, dans lequel l'alliage d'aluminium contient en outre un type ou deux ou plus parmi : Zr : 0,01 à 0,30 %, Cr : 0,01 à 0,30 %, Ti : 0,01 à 0,30 % et Sr : 0,01 à 0,10 %.

10. Tube d'échangeur de chaleur selon l'une quelconque des revendications 7 à 9, dans lequel l'alliage d'aluminium contient en outre 0,05 à 0,30 % de Si.

11. Procédé de fabrication d'un échangeur de chaleur en utilisant le tube d'échangeur de chaleur selon l'une quelconque des revendications 1 à 10, dans lequel
une ailette, un collecteur et le tube d'échange de chaleur qui sont composés d'alliage d'aluminium sont joints par brasage.

12. Pâte de brasure utilisée pour le brasage du tube d'échangeur de chaleur selon l'une quelconque des revendications 1 à 10, la pâte de brasure contenant un mélange pulvérulent qui comprend 2 parties en masse ou plus et 6 parties en masse ou moins d'une poudre de Si, 0,2 partie en masse ou plus et 4,0 parties en masse ou moins d'une poudre de Zn, 0,5 partie en masse ou plus et 5,0 parties en masse ou moins d'une première poudre de fondant constituée d'un composé K-Zn-F et 5 parties en masse ou plus et 20 parties en masse ou moins d'un seconde poudre de fondant constituée d'un composé K-Al-F, et un liant, dans laquelle la teneur en liant est de 5 à 40 % en masse par rapport au total du mélange pulvérulent et du liant.

13. Pâte de brasure selon la revendication 12, dans laquelle la teneur en première poudre de fondant est de 0,5 partie en masse ou plus et de moins de 3,0 parties en masse.
